# EUROPÄISCHE PATENTSCHRIFT

(11) **EP 2 191 925 B1**
(45) Veröffentlichungstag und Bekanntmachung des Hinweises auf die Patenterteilung: **15.01.2014**
(21) Anmeldenummer: 09157120.8
(22) Anmeldetag: 01.04.2009
(51) Int. Cl.: B23K 9/095, B23K 9/167, B23K 10/02, H05H 1/34

(54) **Verfahren, Vorrichtung und Computerprogram zum Plasma-Stichlochschweißen mit aktiver Veränderung des Durchdringungsstroms während des Schweissens**
Method of, device and computer program for keyhole plasma welding with activ change of the penetrating current during welding
Procédé de, dispositif et programme d'ordinateur pour le soudage plasma par trou d'aiguille avec changement actif du courant de pénétration durant le soudage

(30) Priorität: 28.11.2008 DE 102008044203
(43) Veröffentlichungstag der Anmeldung: 02.06.2010
(73) Patentinhaber: Linde AG, 80331 München (DE)
(72) Erfinder: Wilhelm, Gerald, Dr., 85716 Unterschleißheim (DE); Siewert, Erwan, 80796 München (DE)
(74) Vertreter: Kudlek & Grunert Patentanwälte

(56) Entgegenhaltungen:
- DE-A1-102007 017 223
- JP-A- 8 025 053
- US-A- 3 865 173
- US-A- 5 045 667
- US-A- 6 087 616

## Beschreibung

Die vorliegende Erfindung betrifft ein Verfahren und eine Vorrichtung zum Plasma-Stichlochschweißen gemäß dem Oberbegriff der Ansprüche 1 und 9, sowie ein Computerprogramm gemäß Anspruch 15.

Schweißen bezeichnet das stoffschlüssige Verbinden von Bauteilen unter Anwendung von Wärme und/oder Druck. Dabei können bei den bekannten Schweißverfahren Schweißzusatzwerkstoffe zum Einsatz kommen. Für Metalle werden meist Schmelzschweißverfahren mit Wärmezufuhr eingesetzt. Diese könne jedoch auch beim Schweißen von Glas oder für thermoplastische Kunststoffe angewandt werden.

Beim Schmelzschweißen wird üblicherweise mit örtlich begrenztem Schmelzfluss ohne Anwendung von Kraft und somit ohne Druck geschweißt. Das Verbinden der Bauteile erfolgt bei den bekannten Verfahren in der Regel in Form einer Schweißnaht oder eines Schweißpunkts.

Eine besonders interessante Gruppe der Schweißverfahren stellt das sogenannte Schutzgasschweißen dar. Das Schutzgasschweißen gliedert sich in mehrere, voneinander klar zu trennende Verfahren. Beispielhaft seien hier das Metallschutzgasschweißen (MSG-Schweißen), das Wolfram-Inertgasschweißen (WIG-Schweißen) und das Plasmaschweißen genannt. Unter den Schutzgasschweißverfahren nimmt das Plasmaschweißen eine besondere Stellung ein, da durch Einschnürung des Lichtbogens höhere Energiekonzentrationen des Plasmas erzielt werden als in vielen der Konkurrenzverfahren.

Das Plasmaschweißen zählt zu den Wolfram-Schutzgas-(WP-)-Verfahren. Hierbei dient ein Lichtbogen als Wärmequelle. Der Plasmastrahl wird durch Ionisation eines Gases bzw. eines Gasgemisches durch den Lichtbogen erzeugt. Die Plasmaschweißverfahren können nach Art des Lichtbogens unterschieden werden, wobei dieser entweder als sogenannter nicht übertragener Lichtbogen zwischen einer nichtabschmelzenden, negativen (Wolfram-) Elektrode und der Innenwand der Plasmadüse oder als sogenannter übertragener Lichtbogen zwischen der Wolframelektrode und dem Werkstück brennt. Die entsprechenden Verfahren werden als Plasmastrahl- bzw. Plasmalichtbogenschweißen (WPS- bzw. WPL-Schweißen) bezeichnet. Moderne Plasmaschweißanlagen verwenden häufig eine Kombination aus WPS- und WPL-Technik, auch als WPSL-Schweißen bezeichnet, bei der der mit wenigen Ampere betriebene, nicht übertragene Lichtbogen als Pilotlichtbogen verwendet wird, der unter anderem durch eine Vorionisation der Gasstrecke ein berührungsloses Zünden des Hauptlichtstroms ermöglicht. Zugeführte Prozessgase werden durch die genannten Lichtbögen ionisiert, sodass ein auf das Werkstück gerichteter Plasmastrahl ausgebildet wird, der z.B. entlang eines gewünschten Schweißnahtverlaufs bewegt werden kann. Bis zu drei Gase oder Gasgemische können bei Plasmabrennern beispielsweise über - die Elektrode konzentrisch umgebende - Düsensysteme zugeführt werden; darunter das Plasmagas, das Fokussiergas zum Einschnüren des Plasmastrahls und das Schutzgas.

Bei den herkömmlichen Verfahren wird der Plasmastrahl und ggf. das Fokussiergas von Schutzgas umhüllt. Der Einsatz von Schutzgas dient unter anderem dazu, die Schmelze während des Schweißvorgangs vor Oxidation zu schützen.

Das Plasma-Stichlochschweißen stellt eine Variante des Plasmaschweißens dar. Das Plasma-Stichlochschweißen wird in der Regel bis zu einer Blechdicke von 8 bis 10 mm eingesetzt.

Die hauptsächlichen Anwendungsgebiete liegen im chemischen Anlagenbau, der Luft- und Raumfahrtindustrie sowie dem Behälter- und Rohrleitungsbau.

Beim Plasma-Stichlochschweißen durchtritt der Plasmastrahl zu Beginn des Schweißvorgangs meist die gesamte Werkstückdicke. Dabei wird das durch Aufschmelzen des Werkstücks entstehende Schmelzbad vom Plasmastrahl zur Seite gedrückt. Die Oberflächenspannung der Schmelze verhindert ein Durchfallen durch das Stichloch. Stattdessen fließt die Schmelze hinter der sich bildenden Schweißöse wieder zusammen und erstarrt zur Schweißnaht.

Beim üblichen Plasma-Stichlochschweißen handelt es sich also in aller Regel um ein Verfahren, bei dem eine nichtabschmelzende Elektrode eingesetzt wird, die konzentrische von Düsen des Plasmabrenners umgeben ist, über die zumindest ein Plasmagas und ein Schutzgas zugeführt werden. Durch Ionisation des Plasmagases mit Hilfe eines Pilotlichtbogens oder einer Hochfrequenzzündung und durch Einschnüren des Plasmagases mit Hilfe einer gekühlten Düse (Plasmagas-(Kupfer)Düse) und eines etwaigen zusätzlichen Fokussiergases wird ein auf das zu schweißende Werkstück gerichteter und von Schutzgas umhüllter Plasmastrahl ausgebildet. Dieser durchstößt die gesamte Werkstückdicke und drückt das durch Aufschmelzen des Werkstücks entstehende Schmelzbad zur Seite, wobei durch die Oberflächenspannung der Schmelze ein Durchfallen durch das Stichloch verhindert wird. Die Schmelze fließt hinter der sich bildenden Schweißöse wieder zusammen und erstarrt zur Schweißnaht.

Das Plasma-Stichlochschweißen, ein Hochleistungsschweißverfahren, gestattet das Schweißen in höheren Blechdicken mit geringem thermischem Verzug und hohen Schweißgeschwindigkeiten. Es wird momentan hauptsächlich zum schweißtechnischen Fügen von Chrom-Nickel-Stählen eingesetzt. Zudem wird heute auf diese Technik zurückgegriffen, wenn besondere Anforderungen an die Qualität der Schweißnaht hinsichtlich der Durchschweißung, der Nahtform und des Nahtaussehens gestellt werden.

In der Regel wird die beim Schweißen des Werkstücks rückseitig durchtretende sogenannte Schweißnahtwurzel beim Stichlochschweißen durch gegebenenfalls wassergekühlte Formiergasschienen und Badstützen vor atmosphärischen Gasen geschützt. Gleichzeitig wird hierdurch die Schmelze gestützt. Hierbei ist bei Schweißvorgängen, bei denen mit Spalt geschweißt wird, häufig ausreichend, auf der der Schweißdüse gegenüberliegenden Seite des Werkstücks eine genutete Schiene aus geeignetem Material (je nach Material des Werkstückes beispielsweise aus Kupfer, Aluminium oder Edelstahl) vorzusehen, in der sich das durch das Werkstück tretende Prozess- (Schutz-)Gas staut. Falls zweckmäßig kann jedoch auch zusätzliches Schutzgas (Formiergas) bereitgestellt werden. Das Schutzgas bewirkt neben der Verhinderung einer schädlichen Gasaufnahme der Wurzel sowie deren Oxidation auch auch eine Kühlung und vermindert damit die Gefahr des Durchfallens der Schmelze. Ferner trägt das Schutzgas auch zur Formung der Schweißnahtunterseite bei.

Unabdingbare Voraussetzung für die Anwendung des Plasma-Stichlochschweißens ist die prozesssichere Ausbildung des Stichloches. Hierzu sind eine, mit hohem zeitlichem Aufwand verbundene, exakte Schweißkantenvorbereitung und Positionierung der Bauteile sowie das genaue Einhalten der Schweißparameter Grundvoraussetzung. Bei Abweichungen von diesen Randbedingungen, z.B. durch variable Spaltmaße und Kantenversätze sowie Geometriesprünge, die einen veränderliche Wärmeableitung in das Bauteils verursachen, kann es zur ungenügenden Durchschweißung, zur Spritzerbildung, zum Auftreten von Einbrandkerben und zum Durchsacken des Schweißbades kommen. Gerade bei den am häufigsten verschweißten un- und niedriglegierten Stählen kommt es aufgrund starker Variationen der chemischen Zusammensetzung sowie einer geringen Oberflächenspannung und Viskosität vermehrt zum Auftreten dieser Prozessinstabilitäten.

Die Anwendung des Plasma-Stichlochschweißens ist daher momentan nur unter kosten- und zeitintensiven Aufwendungen für die Bauteilvorbereitung und -positionierung möglich. Zudem nimmt die Stabilität des Schweißprozesses bei höheren Blechdicken ab, so dass die zu schweißende Blechstärke stark beschränkt ist. Die insbesondere beim Plasma-Stichlochschweißen von Baustahl dominierende Schwierigkeit einer stabilen Stichlochausbildung schränkt daher die industrielle Anwendbarkeit des Verfahrens auf diesem Gebiet bisher erheblich ein.

Das Plasma-Stichlochschweißen wird meist voll automatisiert durchgeführt, so dass die Stichlochausbildung zur Erzielung einer möglichst homogenen Schweißung überwacht werden muss. Zu diesem Zweck ist bekannt, optische und pneumatische Signale des Schweißprozesses zur Überwachung zu verwenden, indem die Helligkeit des durchtretenden Plasmastrahles sowie der aus seiner kinetischen Energie resultierende Druck zur Regelung des Prozesses verwendet werden. Zudem ist bekannt, die elektrische Leitfähigkeit des auf der Werkstückrückseite (im folgenden als Austrittsseite des Plasmastrahls bezeichnet) austretenden Plasmastrahls als Zeichen für die Durchschweißung direkt oder indirekt über einen Hilfswechselstromkreis zwischen einer Messschiene (die beispielsweise Teil der genannten Formiergasschiene sein kann) und Werkstück zu verwenden. Die Information über die Höhe dieses sogenannten Durchdringungsstroms, der in den bekannten Untersuchungen nur wenige Mikro- bis Milliampere beträgt, wird genutzt, um über die Variation des Schweißstroms die Stichlochausbildung konstant zu halten. Hierzu wird der Schweißstrom auf einen Grundlevel eingestellt, welcher bei vermindertem Durchdringungsstrom auf einen erhöhten Wert (Pulslevel) angehoben wird, um dem Bauteil mehr Energie zuzuführen, so dass sich das Stichloch wieder aufweitet. Da die thermische Belastbarkeit der Plasmagasdüse den maximalen Schweißstrom jedoch begrenzt, kann die Leistungsfähigkeit des Plasmabrenners in der Grundstromphase nicht voll ausgenutzt werden, weil jeweils eine "Reserve" für den Pulslevel vorzusehen ist. Dies hat zur Folge, dass die maximale Schweißgeschwindigkeit und die zu schweißenden Blechdicke reduziert werden.

Ferner ist das "Double-Sided-Keyhole-Welding" bekannt. Hierbei brennt der Lichtbogen zwischen einem Plasma- und einem Wolfram-Inertgas-(WIG-)Schweißbrenner. Das Werkstück wird nach dem Durchdringen des Werkstücks stromlos geschaltet. Die Bereitstellung des WIG-Schweißbrenners erfordert jedoch einen erhöhten Platzbedarf und die Zugänglichkeit von der Bauteilrückseite. Zudem kann durch das stromlos geführte Bauteil nur geringer Einfluss auf die Schweißnahtausbildung ausgeübt werden.

Die US 3 865 173 A offenbart, in einem Inertgasschweißbrenner einen Plasmastrahl zu erzeugen, der hinsichtlich Energiedichte und seiner Lage steuerbar ist, indem ein zugehöriger Schweißlichtbogen mit einem oder mehreren über entsprechend angeordnete Düsen bereitgestellten Inertgasströmen beaufschlagt wird.

In der US 5 045 667 A ist ein manuell steuerbares Plasmaschweißsystem offenbart, bei dem mittels eines Fußschalters ein Schweißstrom zwischen einer Elektrode und einem Werkstück verändert werden kann.

Eine Schweißdüse ohne externe Gaszuführung ist in der US 6 087 616 A offenbart. Plasmagas wird dort durch Erhitzen einer in der Schweißdüse angeordneten Wasserspeichereinrichtung in Form von Wasserdampf bereitgestellt.

Der vorliegenden Erfindung liegt die Aufgabe zugrunde, ein Verfahren zum Plasma-Stichlochschweißen zur Verfügung zu stellen, durch das die Prozessstabilität und Handhabung, insbesondere die Stabilität der Stichlochausbildung, verbessert und/oder die maximal realisierbare Schweißgeschwindigkeit erhöht wird.

Diese Aufgabe wird durch die Merkmale der unabhängigen Patentansprüche 1, 9 und 15 gelöst. Vorteilhafte Ausgestaltungen ergeben sich aus den jeweiligen Unteransprüchen und der nachfolgenden Beschreibung.

Verfahrensseitig wird die gestellte Aufgabe dadurch gelöst, dass beim Plasma-Stichlochschweißen, bei dem mittels eines einer Elektrode zugeführten Schweißstroms und eines Plasmagases ein auf ein zu schweißendes Werkstück gerichteter Plasmastrahl erzeugt wird, der wenigstens teilweise durch das Werkstück tritt, wobei an der Austrittsseite des Plasmastrahls mindestens ein elektrischer Leiter angeordnet ist über den ein Durchdringungsstrom gemessen wird, welcher während des Schweißvorgangs aktiv, insbesondere gesteuert oder geregelt, verändert wird.

Unter "Veränderung des Durchdringungsstroms" sei verstanden, den Durchdringungsstrom aktiv, d.h. gezielt, in seiner Höhe und/oder in seiner Form zu verändern. Es soll hierbei also auch umfasst sein, Form und Geometrie des Durchdringungsstromflusses aktiv zu verändern. Diese Veränderungen bewirken entsprechende Veränderungen in Stärke sowie Form und Geometrie des Plasmastrahls bzw. des zugeordneten Lichtbogens.

Es sei unter "Werkstück" das zu schweißende Material verstanden, das durch das Schweißverfahren bearbeitet werden soll. Insbesondere seien hierunter ein, zwei oder mehrere Elemente verstanden, die durch Schweißen, beispielsweise im Stumpfstoß (I-Stoß) oder Überlappungsstoß, stoffschlüssig zu verbinden sind. Es kann sich hierbei um metallische, nichtmetallische oder an der Fügefläche metallisch beschichtete Werkstücke handeln. Bei nichtmetallischen Werkstoffen wird der Durchdringungsstrom vollständig auf den mindestens einen elektrischen Leiter geleitet.

Erfindungsgemäß wird der Durchdringungsstrom online, in situ gemessen und als Ausgangsgröße zur Steuerung oder Regelung des Plasma-Stichlochschweißprozesses genutzt. Der Durchdringungsstrom wird hierbei aktiv in seiner Höhe, beispielsweise im Bereich von 0-100% verändert, wodurch die Plasma-Stichlochausbildung geregelt werden kann. Somit kann Einfluss auf die Ausbildung der Nahtgeometrie genommen und auf Prozessschwankungen reagiert werden. Eine Regulation des Durchdringungsstroms erlaubt hierbei unter anderem eine präzise Steuerung des Stroms, der in das Werkstück (metallisch oder metallisch beschichtet) geleitet wird, und damit dessen Energieaufnahme.

Wie bereits zuvor dargestellt, begrenzt die thermische Belastbarkeit der Plasmagasdüse den maximal verwendbaren Schweißstrom. Um diesen in entsprechenden bekannten Verfahren gegebenenfalls erhöhen zu können, ist es erforderlich, einen entsprechenden zusätzlichen Verstellbereich vorzusehen und die Düse im Normalzustand bei entsprechend tieferen Werten zu betreiben.

Erfindungsgemäß kann ein entsprechender Schweißbrenner unter Einhaltung sicherer Werte nahe an der thermischen Belastungsgrenze betrieben werden, da kein Reservebereich für eine entsprechende Erhöhung des Schweißstroms (Pulslevel) vorgesehen werden muss. Durch die hierdurch erzielbaren Verbesserungen gegenüber dem Stand der Technik kann die maximale Schweißgeschwindigkeit und die schweißbare Blechdicke erhöht werden.

Durch eine Gewährleistung einer sicheren Durchschweißung und die Onlinedatenerfassung des Durchdringungsstroms mit einer entsprechenden Dokumentation kann der Aufwand in der Qualitätskontrolle signifikant verringert werden. Wird gezielt die schweißstrombasierte Energieeinbringung beeinflusst, kann ferner gegebenenfalls weniger Energie in das Werkstück eingebracht und somit der Verzug reduziert werden. Durch das erfindungsgemäße Verfahren wird es ermöglicht, momentan kritisch zu schweißende Werkstoffe wie unlegierte Stähle, insbesondere auch inhomogene Materialien, mit der Plasma-Stichlochtechnologie zu schweißen. Hierdurch kann das Plasma-Stichlochschweißen nunmehr auch in erhöhtem Umfang für das Verbindungsschweißen im Behälterbau, im Schienenfahrzeugbau, im Schiffbau, in der Automobilindustrie und ähnlichen Anwendungsbereichen verwendet werden.

Es sei in diesem Zusammenhang zu verstehen gegeben, dass das erfindungsgemäße Verfahren eine zusätzliche Veränderung des Schweißstroms, wie aus dem Stand der Technik bekannt, sowie anderer Stellgrößen nicht ausschließt, sofern der Durchdringungsstrom aktiv verändert wird. Ferner schließt das erfindungsgemäße Verfahren die Verwendung weiterer Detektionsverfahren, insbesondere die genannten optischen und/oder pneumatischen Techniken, nicht aus. Derartige Verfahren können gegebenenfalls unterstützend eingesetzt werden.

Erfindungsgemäß kann der Durchdringungsstrom in vorteilhafter Weise mittels veränderbarer elektrischer Widerstände, mittels Leistungsschaltern und/oder durch eine Veränderung des Abstandes zwischen dem elektrischen Leiter und dem Werkstück verändert werden. Insbesondere kann hierbei der Abstand zwischen dem Werkstück und dem elektrischen Leiter stufenlos eingestellt werden.

In diesem Zusammenhang ist zwischen einer im Folgenden so bezeichneten "äußeren Regelung" und einer "inneren Regelung" zu unterscheiden. Die äußere Regelung bezeichnet die aktive Beeinflussung des Stroms durch entsprechende Widerstände, Leistungsschalter und Abstandsregelungseinrichtungen. Die innere Regelung, die ohne aktive Beeinflussung abläuft, beruht auf folgendem Phänomen: Schließt sich das Stichloch aus prozessbedingten Umständen, wird mehr Energie durch Elektronen in das Werkstück geleitetet, so dass sich das Stichloch durch den erhöhten Energieeintrag wieder aufweitet. Im Gegensatz dazu gelangt bei weit geöffneten Stichloch mehr Energie in den Leiter (und weniger Energie in das Werkstück), so dass sich das Stichloch wieder verkleinert. Die innere Regelung kann insbesondere bei kleineren Veränderungen der Randbedingungen beim Schweißprozess ausgenutzt werden. Erfindungsgemäß kann eine Kombination unterschiedlicher Regelungsverfahren erfolgen. So kann eine Grobeinstellung der Höhe des Durchdringungsstroms, an dem über einen längeren Zeitabschnitt festgehalten wird, über eine äußere Regelung vorgenommen werden. Innerhalb des betreffenden Zeitabschnitts kann dann die Stichlochausbildung durch die innere Regelung konstant gehalten werden. Bei dieser Vorgehensweise kann beispielsweise die äußere Regelung bei vorhersehbaren Änderungen im zu schweißenden Material (beispielsweise einer Zunahme der Materialstärke) aktiv diesen Änderungen angepasst werden, wohingegen die innere Regelung für nicht vorhersehbare Materialänderungen, die einen bestimmten, gegebenenfalls zu definierenden Umfang nicht überschreiten (beispielsweise Änderungen in der Zusammensetzung der Legierung), ausgenutzt wird.

Eine äußere Regelung des Durchdringungsstroms über verstellbare elektrische Widerstände kann in vorteilhafter Weise insbesondere für starke, jedoch langsam erfolgende Änderungen der Randbedingungen im Schweißverlauf angewandt werden. Hingegen können Leistungsschalter den Durchdringungsstrom insbesondere bei großen und schnellen Änderungen der Randbedingungen im Schweißverlauf regeln.

Gemäß einer besonders vorteilhaften Ausgestaltung der vorliegenden Erfindung wird der Durchdringungsstrom periodisch, stufenweise, kontinuierlich oder an die Bedingungen des Schweißprozesses angepasst, optional auch in Kombination mit der Beaufschlagung mit einem weiteren externen Stroms zwischen Werkstück und Kupferschiene verändert. Weist ein Durchdringungsstrom bestimmte Charakteristika, wie beispielsweise eine bestimmte Amplitude, Frequenz oder Wellenform auf, kann, falls zweckmäßig, eine entsprechende Änderung beispielsweise durch Filter und Frequenzumformer vorgenommen werden. Eine entsprechende Veränderung und/oder Beaufschlagung beinhaltet eine stufenweise und/oder kontinuierliche Modifikation des Stroms, um auf Änderungen in geeigneter Weise zu reagieren. Beispielsweise kann eine bestimmte erkannte Änderung des gemessenen Durchdringungsstroms dazu führen, dass dieser nur langsam und kontinuierlich angepasst wird, um übermäßig große, nachteilige, Systemsprünge zu vermeiden.

Vorteilhafterweise können in einem erfindungsgemäßen Verfahren auf Grundlage des gemessenen Durchdringungsstroms veränderliche Prozessgrößen (z.B. Kantenversatz, Spaltbreite, Bauteilgeometrie) abgeleitet werden, und die Veränderung des Durchdringungsstroms kann auf Grundlage der veränderlichen Prozessgrößen vorgenommen werden. Es versteht sich, dass neben einer Detektion von Änderungen im Durchdringungsstrom auch eine vorab bekannte Materialänderung, beispielsweise eine bekannte, vorherzusehende Zunahme der Materialstärke zur Veranlassung einer Veränderung des Durchdringungsstroms verwendet werden kann. Beispielsweise kann im Rahmen einer Serienfertigung unter Verwendung von Stromprofilen ein jedes Werkstück zunächst für einen ersten Zeitabschnitt (entsprechend einer ersten Schweißstrecke) mit einem ersten eingestellten Durchdringungsstrom geschweißt werden, und hierauf ein zweiter Zeitabschnitt (entsprechend einer zweiten Schweißstrecke) mit einem zweiten Durchdringungsstrom folgen.

Vorteilhafterweise können auf Grundlage des gemessenen Durchdringungsstroms als veränderliche Prozessgrößen die Durchschweißung sowie die Spaltbreite und der Kantenversatz eines Schweißstoßes abgeleitet werden. Eine Veränderung des Durchdringungsstroms kann dann auf Grundlage dieser veränderlichen Prozessgrößen vorgenommen werden. Im Gegensatz zu bisher bekannten Verfahren wird der Durchdringungsstrom dabei nicht ausschließlich als Indikator der Durchschweißung verwendet.

Vorteilhafterweise werden zum Plasma-Stichlochschweißen neben dem Plasmagas ein Fokussiergas, ein Schutzgas und/oder ein Formiergas verwendet, wobei als das bereits oben erwähnte Plasmagas, als Fokussiergas, als Schutzgas und/oder als Formiergas ein Gas oder ein Gasgemisch verwendet wird, das aus der Gruppe ausgewählt ist, die aus Argon, Helium, Wasserstoff, Kohlendioxid, Sauerstoff und Gemischen hiervon besteht. Beispielhafte Gase oder Gasgemische beinhalten Argon sowie Argon mit maximal 7 % Wasserstoff (Plasmagas), Argon-Helium-Gemische mit höheren Wasserstoffanteilen (Fokussiergas), Gemische aus den Inertgasen Argon und Helium mit Zusatz weiterer Gase wie Wasserstoff oder Stickstoff (Schutzgas) und leicht reduzierend wirkende Gasgemische aus Stickstoff und Wasserstoff (Formiergas). Durch die Verwendung optimaler Gasmischungen kann das Schweißergebnis in positiver Weise beeinflußt werden.

Gemäß einer vorteilhaften Ausgestaltung wird als wenigstens ein elektrischer Leiter im Rahmen des erfindungsgemäßen Verfahrens wenigstens eine wassergekühlte Kupferschiene, insbesondere in Form einer Formiergasschiene, wie sie im Rahmen bisheriger Plasma-Stichlochschweißverfahren zur Bereitstellung eines entsprechenden Schutzgases und zur Messung des Durchdringungsstroms zum Einsatz kommt, verwendet. Es versteht sich, dass je nach Einsatzzweck des Verfahrens auch andere Materialien als Kupfer verwendet werden können, und dass, wenn im Folgenden von "Kupferschiene" die Rede ist, auch diese anderen Materialien als umfasst anzusehen sind. Das Werkstück ist elektrisch von der Kupferschiene isoliert. Die Formiergasschiene ist zweckmäßigerweise U-förmig aufgebaut. Die Seiten des U-Profils können aus elektrisch nicht leitendem Material bestehen, die Basis weist die als Leiter verwendete Kupferschiene auf. Die offene Seite der U-förmig aufgebauten Formiergasschiene weist in Richtung des Werkstücks. Das Werkstück und die Kupferschiene werden im Rahmen des erfindungsgemäßen Verfahrens separat durch Stromkabel an einen Pol der Plasmaschweißstromquelle angeschlossen.

Vorteilhafterweise können gemäß einer besonders bevorzugten Ausführungsform auch zwei (oder mehr) elektrische Leiter verwendet werden, über die der Durchdringungsstrom geleitet wird. Auf diese Weise lässt sich auf die Form oder Geometrie des Durchdringungsstromflusses und damit des Plasmastrahls Einfluss nehmen. Die (zwei) elektrischen Leiter können hierbei als parallele Kupferschienen einer entsprechenden Formiergasschiene ausgebildet sein. Die Basis der U-förmigen Formiergasschiene besteht dabei aus zwei separaten, elektrisch voneinander getrennten, wassergekühlten Kupferschienen. Jede Kupferschiene ist separat über Stromleitungen mit Leistungsschaltern verbunden, die wiederum zusammen auf einen Pol der Plasmaschweißstromquelle geführt werden. Hierdurch kann der thermische Verzug des Werkstücks durch die Erzeugung eines X-förmigen Nahtquerschnitts minimiert werden. Es versteht sich, dass auch vorgesehen sein kann, die einzelnen Kupferschienen getrennt voneinander oder gemeinsam durch weitere Einstellungsmittel einzustellen, und gegebenenfalls den auf jede einzelne Kupferschiene fließenden Strom zu messen und/oder zu verändern. Hierdurch können gegebenenfalls weitere vorteilhafte Strahlgeometrien bewirkt bzw. beeinflusst werden. Ferner kann auch zu diesem Zweck vorgesehen sein, zwei (oder mehr) Kupferschienen mit unterschiedlicher Geometrie (beispielsweise unterschiedlicher Breite und/oder Oberflächenausgestaltung) zu verwenden. Es sei zudem zu verstehen gegeben, dass die Erfindung nicht auf die Verwendung von nur einer oder zwei Schienen beschränkt ist, sondern dass auch eine andere Anzahl von Schienen verwendet werden kann, ohne den beanspruchten Umfang zu verlassen. Es ist vorbehalten, für das Vorsehen von zwei oder mehr Leiterschienen bei einem Verfahren gemäß Oberbegriff des Anspruchs 1 gesondert Schutz zu beanspruchen. Gleiches gilt für die noch zu erläuternde Vorrichtung gemäß Anspruch 9.

Die Erfindung umfasst ferner eine Vorrichtung zum Plasma-Stichlochschweißen mit wenigstens einer durch einen Schweißstrom beaufschlagbaren Elektrode und wenigstens einer Düse für ein Plasmagas, wodurch ein Plasmastrahl erzeugbar ist und wenigstens einem elektrischen Leiter, wobei zwischen der Elektrode und dem Leiter ein zu schweißendes Werkstück anordenbar ist, sowie Mitteln zum Messen eines Durchdringungsstroms zwischen dem Werkstück und dem wenigstens einen elektrischen Leiter, wobei die Vorrichtung erfindungsgemäß ferner Mittel zum aktiven Verändern des Durchdringungsstroms aufweist. Eine erfindungsgemäße Vorrichtung ist insbesondere zur Durchführung eines erfindungsgemäßen Verfahrens geeignet und weist alle Merkmale auf, dieses Verfahren durchzuführen.

Vorteilhafterweise weist eine entsprechende Vorrichtung als Mittel zum Verändern des Durchdringungsstroms veränderbare Widerstände, Leistungsschalter und/oder Abstandseinstellungsmittel zum Verändern des Abstandes zwischen dem elektrischen Leiter und dem Werkstück auf. Hierdurch kann insbesondere eine externe Regelung, wie sie in Bezug auf das erfindungsgemäße Verfahren oben dargestellt ist, bewirkt werden. Selbstverständlich können auch mehrere Mittel in Kombination vorgesehen sein. Vorteilhaft lassen sich durch die Verwendung von regelbaren Widerständen (Potentiometern) stärkere, jedoch langsame Veränderungen des Durchdringungsstroms bewirken. Für schnelle, große Veränderungen können entsprechende Leistungsschalter vorgesehen sein.

Entsprechend einer vorteilhaften Ausgestaltung weist eine Vorrichtung als wenigstens einen elektrischen Leiter wenigstens eine Leiterschiene auf. Durch die Verwendung von Leiterschienen aus unterschiedlichen Materialien (beispielsweise Kupfer beim Schweißen von Stahl oder Edelstahl beim Schweißen von Aluminium oder Kupfer) kann eine entsprechende Vorrichtung für die Bearbeitung unterschiedlicher Werkstoffe eingesetzt werden.

Vorteilhafterweise ist die wenigstens eine Leiterschiene Teil wenigstens einer Formiergasschiene. Hierdurch ist es möglich, eine entsprechende, vorhandene Schweißvorrichtung für das erfindungsgemäße Verfahren einzusetzen, ohne dass umfangreiche strukturelle Veränderungen vorzunehmen sind.

Es kann sich als besonders vorteilhaft erweisen, eine U-förmige, mit der offenen Seite in Richtung der Austrittsseite des Plasmastrahls weisende und senkrecht zu diesem ausgerichtete Formiergasschiene vorzusehen, wobei wenigstens eine wassergekühlte Kupferschiene als wenigstens ein elektrischer Leiter vorgesehen ist.

Gemäß einer vorteilhaften Weiterbildung weist die U-förmige, mit der offenen Seite in Richtung der Austrittsseite des Plasmastrahls weisende und senkrecht zu diesem ausgerichtete Formiergasschiene zwei wassergekühlte Kupferschienen als elektrische Leiter auf, die durch ein nichtleitendes Element getrennt sind, wobei die der Austrittsseite des Plasmastrahls zuweisenden Seiten der U-förmigen Formiergasschiene ein nichtleitendes Material aufweisen. Durch die nichtleitenden Seiten kann hierbei ein direkter Kontakt zwischen der Formiergasschiene und dem Werkstück hergestellt werden, wodurch die Formiergasschiene eine Stützfunktion erfüllen kann. Durch die zwei nebeneinander vorgesehenen elektrischen Leiter kann der Durchdringungsstrom auf beide Schienen geleitet werden, wodurch einerseits ein besonderer, bereits oben dargestellter vorteilhafter Querschnitt der Schweißnaht bewirkt werden kann, ferner kann die Energieaufnahme und die Erwärmung der einzelnen Leiter hierdurch vermindert werden. Diese Maßnahmen führen daher auch zu einem geringeren Kühlaufwand.

Die Erfindung sowie weitere Ausgestaltungen der Erfindung werden im Folgenden anhand der in den Figuren dargestellten Ausführungsbeispiele näher erläutert. Im Einzelnen zeigen
- Figur 1: eine schematische Darstellung einer Vorrichtung für das Plasma-Stichlochschweißen gemäß dem nächstliegenden Stand der Technik,
- Figur 2: eine schematische Darstellung einer Vorrichtung für das Plasma-Stichlochschweißen, die für ein Verfahren entsprechend einer besonders bevorzugten Ausführungsform der Erfindung geeignet ist,
- Figur 3: eine schematische Darstellung einer weiteren Vorrichtung für das Plasma-Stichlochschweißen, die für ein Verfahren entsprechend einer besonders bevorzugten Ausführungsform der Erfindung geeignet ist,
- Figur 4: eine schematische Darstellung einer weiteren Vorrichtung für das Plasma-Stichlochschweißen, die für ein Verfahren entsprechend einer besonders bevorzugten Ausführungsform der Erfindung geeignet ist,
- Figur 5: eine schematische Darstellung einer weiteren Vorrichtung für das Plasma-Stichlochschweißen, die für ein Verfahren entsprechend einer besonders bevorzugten Ausführungsform der Erfindung geeignet ist, und
- Figur 6: eine schematische Darstellung einer weiteren Vorrichtung für das Plasma-Stichlochschweißen, die für ein Verfahren entsprechend einer besonders bevorzugten Ausführungsform der Erfindung geeignet ist.

In den Figuren bezeichnen gleiche Bezugszeichen gleiche oder entsprechende Elemente. Auf eine wiederholte Beschreibung dieser wird im Folgenden der Einfachheit halber verzichtet.

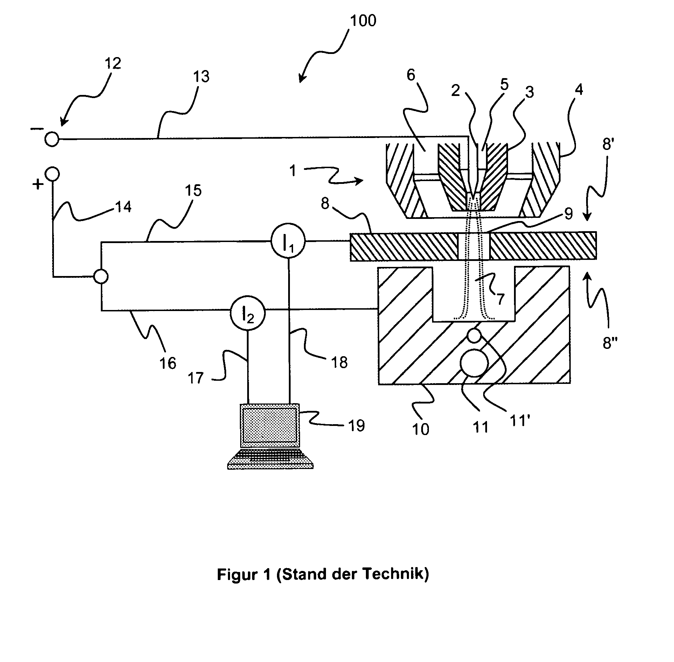

In Figur 1 ist eine Vorrichtung für das Plasma-Stichlochschweißen gemäß Stand der Technik (siehe Oberbegriff der Ansprüche 1 und 9) schematisch im Querschnitt dargestellt und insgesamt mit 100 bezeichnet. Die Vorrichtung weist einen Schweißbrenner 1 auf, der auf ein Werkstück 8 ausgerichtet ist. Der Schweißbrenner 1 weist eine Elektrode 2, vorzugsweise eine nichtabschmelzende Wolframelektrode 2, auf, die mit dem Minuspol einer Schweißstromquelle 12 über Leitung 13 verbunden ist. Die Elektrode 2 ist von einer ersten Düse 3 umgeben, in deren Lumen 5 ein Plasmagas bereitgestellt wird. Eine weitere Düse 4, die die erste Düse und die Elektrode konzentrisch umgibt, ist vorgesehen, in deren Lumen 6 ein weiteres Gas, beispielsweise ein Fokussiergas und/oder ein Schutzgas bereitgestellt werden kann. Weitere umgebende, konzentrisch angeordnete Düsen zur Bereitstellung weiterer Gase können vorgesehen sein, sind jedoch der Einfachheit halber nicht dargestellt. Unter dem Einfluss der Spannung auf die Elektrode 2 in Anwesenheit des Plasmagases 5 bildet sich ein Plasmastrahl 7 aus.

In Figur 1 ist dargestellt, wie der Plasmastrahl 7 das Werkstück 8 durch ein Stichloch 9 von einer Eintrittsseite 8' in Richtung einer Austrittsseite 8'' durchtritt. Auf der Austrittsseite 8" des Plasmastrahls 7 ist ein elektrischer Leiter 10 vorgesehen, der in der Figur 1 der Einfachheit halber in seiner Gesamtheit schraffiert dargestellt ist. Vorteilhafterweise ist jedoch, wie oben erläutert, der elektrische Leiter 10 als metallische Schiene 10 Teil einer entsprechenden Formiergasschiene, die ein U-förmiges Profil aufweist, dessen Öffnung in Richtung des Werkstückes weist. In der Regel wird im Rahmen einer derartigen Ausgestaltung nur die innenliegende Basis des Profils elektrisch leitend ausgebildet sein, wohingegen die dem Werkstück zuweisenden Flanken aus isolierendem Material hergestellt sind. In dem elektrischen Leiter 10 und/oder in der entsprechenden Formiergasschiene sind Kanäle 11, 11' vorgesehen, bei denen es sich um Kanäle zur Wasserkühlung und/oder um Kanäle handeln kann, mittels derer ein Schutzgas oder ein entsprechendes weiteres Gas bereitgestellt werden kann. Der elektrische Leiter 10 ist über Leitungen 14 und 16, das Werkstück 8 ist über Leitungen 14 und 15 mit dem positiven Pol der Schweißstromquelle 12 verbunden. Ferner ist in der Figur 1 eine Mess- bzw. Auswerteeinheit 19, hier als Computer symbolisiert, dargestellt, die den Gesamtstrom, I = I₁ + I₂, und den Durchdringungsstrom I₂ misst. Der zwischen Elektrode und Werkstück fließende Strom ist mit I₁ bezeichnet. Der Durchdringungsstrom variiert in Abhängigkeit von veränderlichen Prozessgrößen. Bei Verwendung vollständig nichtmetallischer Werkstücke gilt hier und in den übrigen Figuren: 1 = I₂ und I₁ = 0, da der Durchdringungsstrom vollständig auf die mindestens eine Leiterschiene geleitet wird.

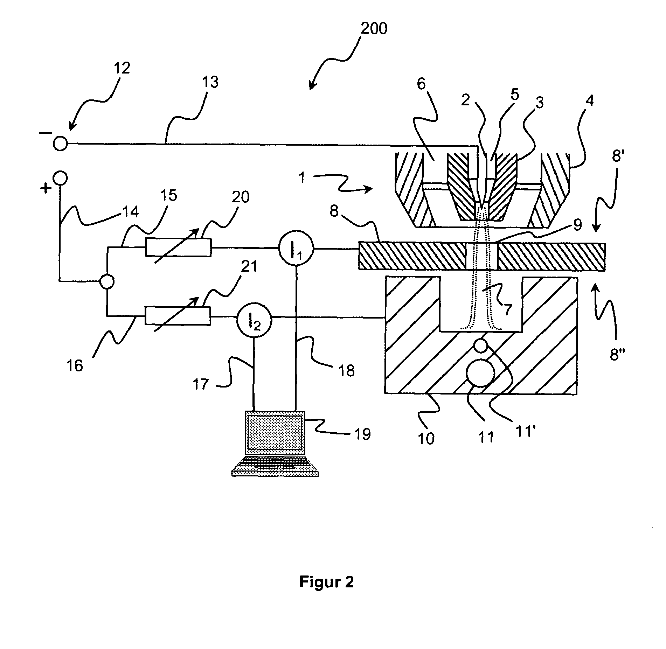

Figur 2 zeigt eine Vorrichtung für das Plasma-Stichlochschweißen entsprechend einer besonders bevorzugten Ausführungsform der vorliegenden Erfindung, die insgesamt mit 200 bezeichnet ist. Vorrichtung 200 entspricht in wesentlichen Teilen der Vorrichtung 100 der Figur 1, mit dem Unterschied, dass in den Zuleitungen 15 und 16 zu dem Werkstück 8 und dem Leiter 10 variable Widerstände 20 bzw. 21 vorgesehen sind. Über eine Veränderung der variablen Widerstände 20 und 21 ist es möglich, den Durchdringungsstrom I₂ zu verändern. Vorrichtung 200 ist hierbei insbesondere für ein Einstellen und Überwachen des Durchdringungsstroms I₂ geeignet, im Rahmen dessen zusätzlich die innere Regelung, wie oben erläutert, ausgenutzt werden kann. Damit eignet sich die Vorrichtung 200 insbesondere auch für geringe Änderungen der Randbedingungen im Schweißverlauf. Hierbei kann über die veränderlichen Widerstände 20, 21 eine Grobeinstellung der Höhe des Durchdringungsstroms I₂ erfolgen, an dem dann beispielsweise über einen längeren Zeitabschnitt festgehalten werden kann. Während dieses Zeitabschnittes kann dann eine Stichlochausbildung durch eine innere Regelung konstant gehalten werden. Die Veränderung des Durchdringungsstroms I₂ durch die veränderlichen Widerstände 20, 21 kann beispielsweise auf unterschiedliche Materialien oder Legierungen, die in der Vorrichtung bearbeitet werden sollen, Rücksicht nehmen. Insbesondere kann hierbei auf eine veränderliche Materialstärke eingegangen werden. Wenngleich die veränderlichen Widerstände in der Figur 2 als nicht mit weiteren Vorrichtungen verbunden gezeigt sind, kann insbesondere auch vorgesehen sein, eine Veränderung der veränderlichen Widerstände 20, 21 über weitere Steuerungseinrichtungen vorzunehmen. Die Mess- bzw. Überwachungseinrichtung 19 dient im Rahmen der Figur 2 bzw. in Vorrichtung 200 lediglich zur Überwachung des Durchdringungsstroms I₂.

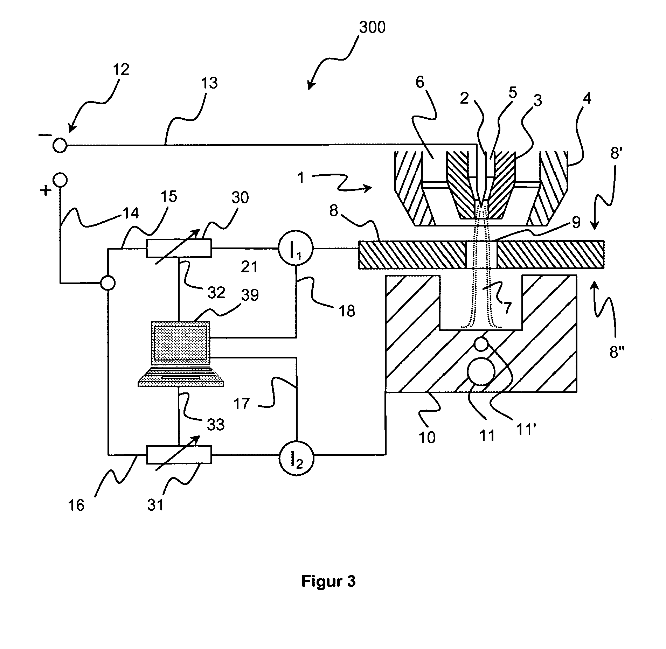

In Figur 3 ist eine Vorrichtung für das Plasma-Stichlochschweißen gemäß einer besonders bevorzugten Ausführungsform der Erfindung gezeigt und insgesamt mit 300 bezeichnet. Vorrichtung 300 entspricht in wesentlichen Teilen der Vorrichtung 200 der Figur 2. Abweichend von Vorrichtung 200 weist Vorrichtung 300 eine Mess- und Steuereinheit 39 auf, die zusätzlich zur Verbindung über die Messleitungen 17, 18 mit den veränderlichen Widerständen, hier mit 30 und 31 bezeichnet, über Steuerleitungen 32 verbunden ist. Über die Steuerleitungen 32 und 33 kann eine Einstellung (Regelung oder Steuerung) der veränderlichen Widerstände 30 und 31 erfolgen. Durch die Vorrichtung 39 ist damit eine kontinuierliche (in-situ-)Überwachung und Regelung des Durchdringungsstromes I₂ über die verstellbaren elektrischen Widerstände 30, 31 möglich. Vorrichtung 300 eignet sich damit insbesondere für starke, langsam erfolgende Änderungen der Randbedingungen im Schweißverlauf. Aufgrund der Ansprechdauer der Vorrichtung ist Figur 3 für eine schnelle Veränderung der Durchdringungsströme I₂ hingegen weniger geeignet.

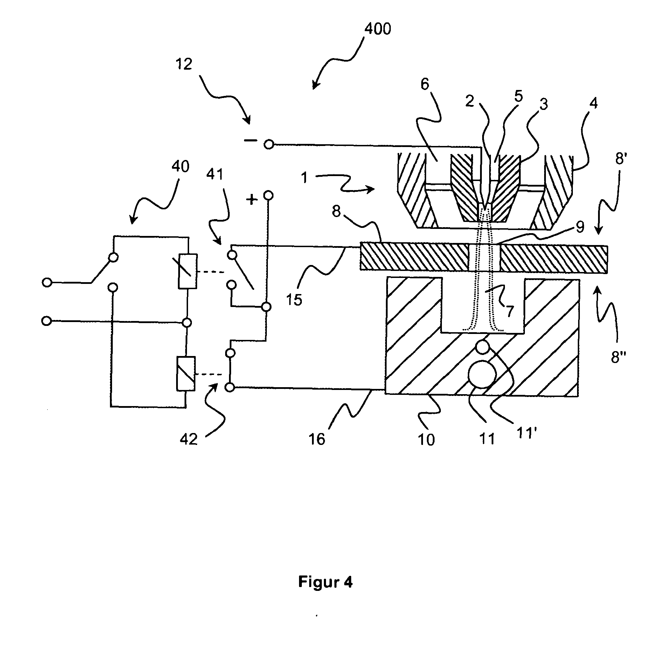

In Figur 4 ist eine Vorrichtung dargestellt und insgesamt mit 400 bezeichnet. Im Gegensatz zu den vorherigen Figuren ist in dieser Figur jedoch der Einfachheit halber die Strommessung des Durchdringungsstroms I₂ nicht dargestellt. Es versteht sich jedoch, dass auch Vorrichtung 400 eine entsprechende Messeinrichtung aufweisen kann. In der Vorrichtung ist eine Leistungsschaltungssteuereinheit 40 dargestellt, über die die Leistungsschalter 41, 42 angesteuert werden können. Über Leistungsschalter 41, 42 ist es möglich, das Werkstück 8 bzw. den Leiter 10 schnell von dem positiven Pol der Schweißstromquelle 12 zu trennen, bzw. die entsprechenden Elemente hiermit zu verbinden. Durch die unmittelbar erfolgende Schaltung der Leistungsschalter 41, 42 kann insbesondere auf große, schnelle Änderungen der Randbedingungen im Schweißverlauf Rücksicht genommen bzw. reagiert werden. So kann beispielsweise auch auf Materialfehler, die bei einer Fortführung des Schweißvorgangs das Schweißergebnis gefährden würden, schnell in Form einer entsprechenden (Not-)Schaltung reagiert werden.

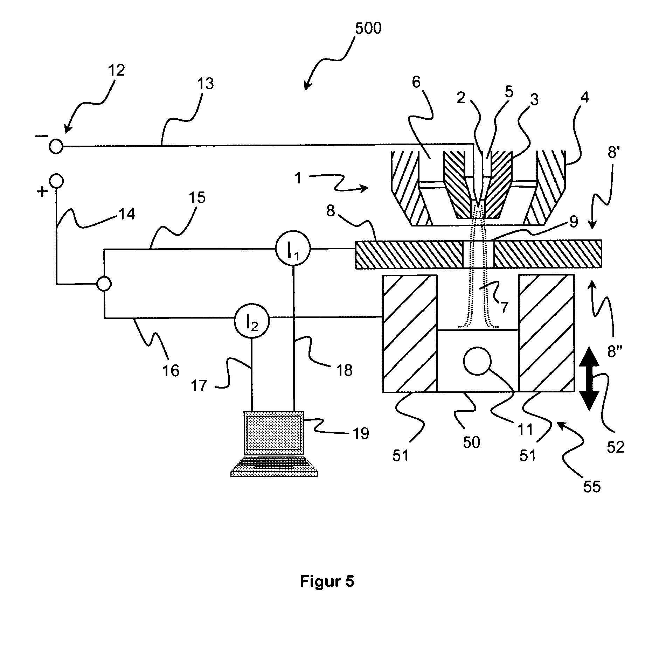

In Figur 5 ist eine Vorrichtung für das Stichlochschweißen gemäß einer besonders bevorzugten Ausführungsform der Erfindung dargestellt und insgesamt mit 500 bezeichnet. Vorrichtung 500 entspricht in wesentlichen Teilen der Vorrichtung der Figur 1. Abweichend von Vorrichtung 100 der Figur 1 ist die auf der Austrittsseite 8" des Plasmastrahls angeordnete Einheit 55, die im Wesentlichen der Einheit 10 der Figur 1 entspricht, jedoch hier, wie durch den Auf-/Ab-Pfeil 52 veranschaulicht, auf das Werkstück 8 zu- und von ihm wegbewegbar. Durch eine stufenlose Verstellung kann hierdurch der Durchdringungsstrom I₂ beeinflusst werden. Der Durchdringungsstrom I₂ wird als korrelierend zu dem Abstand zwischen Einheit 50 und dem Werkstück 8 angesehen, wobei die Veränderung des Durchdringungsstroms durch die Abstandsveränderung auf eine Erhöhung des Widerstandes des Lichtbogens zurückzuführen ist. Einheit 55 ist in Figur 5 im Detail dargestellt. Einheit 55 stellt eine Formiergasschiene dar, die einen metallischen Teil 50 und nicht-metallische bzw. isolierende Teile 51 in U-Konfiguration aufweist. Die U-förmige Formiergasschiene 55 weist mit der offenen Seite zu dem Werkstück 8. In dem metallischen Teil 50 ist ein Kanal 11 ausgebildet, der insbesondere zur Kühlung der Schiene 50 dienen kann. Es sei zu verstehen gegeben, dass eine Bewegung der Kupferschiene 50 in Pfeilrichtung 52 (auch innerhalb des Isoliermaterials) insbesondere auch zusätzlich zu den im Rahmen der zuvor erläuterten Figuren dargestellten Regelungs- bzw. Steuerungsmechanismen erfolgen kann. Insbesondere kann eine entsprechende Vorrichtung mehrere der genannten Merkmale in Alleinstellung bzw. in beliebiger Anordnung aufweisen.

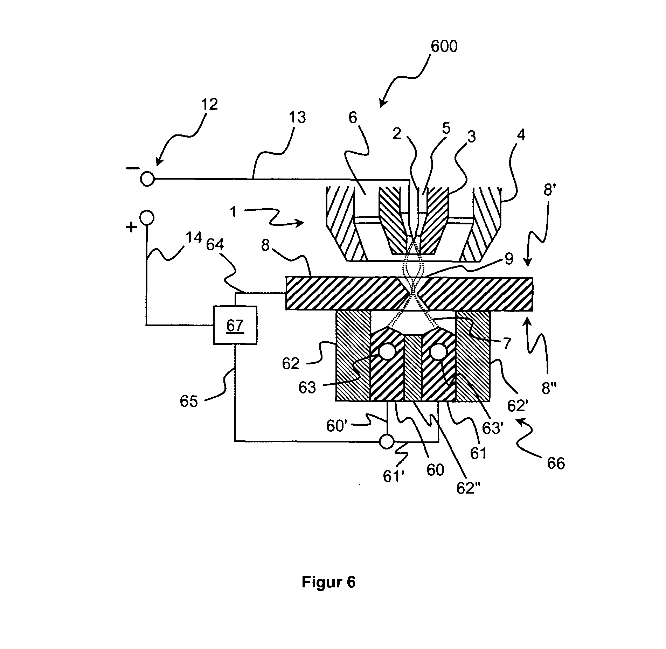

In Figur 6 ist eine Vorrichtung für das Plasma-Stichlochschweißen entsprechend einer besonders bevorzugten Ausführungsform der Erfindung dargestellt und insgesamt mit 600 bezeichnet. In Figur 6 ist insbesondere Einheit 66, die der Formiergasschiene 55 bzw. den Leiter 10 der vorherigen Figuren entspricht, im Detail dargestellt. Auch Vorrichtung 600 kann über entsprechende Regel- und Steuermechanismen und -Vorrichtungen zur Beeinflussung des Durchdringungsstroms I₂ verfügen, die im Rahmen der Figur 6 zusammenfassend mit dem Bezugszeichen 67 bezeichnet sind. Steuereinrichtung 67 kann insbesondere auch Mittel zur Beaufschlagung des Werkstücks mit weiteren Strömen und/oder Spannungen aufweisen. Vorrichtung 600 weist eine Formiergasschiene 66 auf, die aus zwei metallischen (leitenden) Elementen 60, 61 und drei nicht-leitenden (isolierenden) Elementen 62, 62', 62'' besteht. Es sei zu verstehen gegeben, dass die Vorrichtung auch eine andere Anzahl von leitenden Elementen 60, 61 aufweisen kann. Wenngleich die leitenden Elemente 60, 61 als geometrisch identisch dargestellt sind, kann es insbesondere auch vorgesehen sein, unterschiedliche Geometrien und/oder Oberflächengestaltungen zu verwenden. Die leitenden Elemente 60, 61 repräsentieren metallische Schienen, die in der Darstellung über Wasskühlungskanäle 63, 63' verfügen. Die leitenden Elemente sind über nicht-leitende Elemente 62, 62', 62'' aneinander befestigt und bilden zusammen die Formiergasschiene 66. In der Darstellung der Figur 6 sind die leitenden Elemente 60, 61 über Leitungen 60', 61' zusammengeschlossen und über Leitung 65, analog zur Leitung 16 der vorherigen Figuren mit Steuer- bzw. Messeinheit 67 verbunden. Es versteht sich, dass die einzelnen Schienen 60, 61 auch unabhängig voneinander mit der Steuer- bzw. Messeinrichtung 67 verbunden sein können. Werkstück 8 ist ebenfalls über eine Leitung 64 mit der Steuer- bzw.

Messeinrichtung 67 verbunden. Durch die besondere Ausgestaltung der Formiergasschiene 66 kann erreicht werden, dass der Durchdringungsstrom auf zwei Punkte der Formiergasschiene geleitet wird. Hierdurch kann eine besonders verzugsarme Schweißnaht erzielt werden, indem ein Fokussiereffekt des Plasmastrahls 7 in Werkstückhöhe und eine Aufweitung des Lichtbogens an der Anode erzielt wird, wie in Figur 6 dargestellt ist.

Die Zeichnung, die Beschreibung und die Ansprüche enthalten zahlreiche Merkmale in Kombination. Es versteht sich, dass in den dargestellten Figuren nur beispielhafte Ausführungsformen der Erfindung dargestellt sind. Daneben ist jede andere Ausführungsform denkbar, ohne den Rahmen der Erfindung zu verlassen, die in den Ansprüchen definiert wird.

## Patentansprüche

1. Verfahren zum Plasma-Stichlochschweißen, bei dem mittels eines einer Elektrode (2) zugeführten Schweißstroms und eines Plasmagases ein auf ein zu schweißendes Werkstück (8) gerichteter Plasmastrahl (7) erzeugt wird, der wenigstens teilweise durch das Werkstück (8) tritt, wobei an der Austrittsseite (8") des Plasmastrahls (7) unterhalb des Werkstücks (8) mindestens ein elektrischer Leiter (10, 50, 60, 61) angeordnet ist, über den ein Durchdringungsstrom (I₂) gemessen wird, **dadurch gekennzeichnet, dass** der Durchdringungsstrom (I₂) während des Schweißvorgangs aktiv verändert wird.

2. Verfahren nach Anspruch 1, **dadurch gekennzeichnet, dass** der Durchdringungsstrom (I₂) mittels veränderbarer elektrischer Widerstände (20, 21, 30, 31), mittels Leistungsschaltern (41, 42) und/oder durch eine Veränderung des Abstandes zwischen dem elektrischen Leiter (10, 50, 60, 61) und dem Werkstück (8) verändert wird.

3. Verfahren nach Anspruch 1 oder 2, **dadurch gekennzeichnet, dass** der Durchdringungsstrom (I₂) periodisch, stufenweise, kontinuierlich oder in situ und/oder durch Beaufschlagung mit wenigstens einem weiteren externen Strom verändert wird.

4. Verfahren nach einem der vorstehenden Ansprüche, **dadurch gekennzeichnet, dass** auf Grundlage des gemessenen Durchdringungsstroms (I₂) veränderliche Prozessgrößen abgeleitet werden, und die Veränderung des Durchdringungsstroms (I₂) auf Grundlage der veränderlichen Prozessgrößen vorgenommen wird.

5. Verfahren nach Anspruch 4, **dadurch gekennzeichnet, dass** als veränderliche Prozessgrößen die Durchschweißung, die Spaltbreite und/oder der Kantenversatz eines Schweißstoßes verwendet werden.

6. Verfahren nach einem der vorstehenden Ansprüche, **dadurch gekennzeichnet, dass** neben dem Plasmagas ein Fokussiergas, ein Schutzgas und/oder ein Formiergas verwendet werden, wobei als Plasmagas, als Fokussiergas, als Schutzgas und/oder als Formiergas ein Gas oder ein Gasgemisch verwendet wird, das jeweils aus der Gruppe ausgewählt ist, die aus Argon, Helium, Wasserstoff, Kohlendioxid, Sauerstoff und Gemischen hiervon besteht.

7. Verfahren nach einem der vorstehenden Ansprüche, **dadurch gekennzeichnet, dass** als wenigstens ein elektrischer Leiter (10, 50, 60, 61) wenigstens eine in einer Formiergasschiene verbaute, wassergekühlte Kupferschiene (10, 50, 60, 61) verwendet wird.

8. Verfahren nach einem der vorstehenden Ansprüche **dadurch gekennzeichnet, dass** mindestens zwei elektrische Leiter (60, 61) vorgesehen sind und der Durchdringungsstrom (I₂) über die mindestens zwei elektrischen Leiter (60, 61) geleitet wird.

9. Vorrichtung zum Plasma-Stichlochschweißen mit wenigstens einer durch einen Schweißstrom beaufschlagbaren Elektrode (2) und wenigstens einer Düse für ein Plasmagas (3), wodurch ein Plasmastrahl (7) erzeugbar ist, und wenigstens einem elektrischen Leiter (10, 50, 60, 61) unterhalb des Werkstücks (8), wobei zwischen der Elektrode (2) und dem Leiter (10, 50, 60, 61) ein zu schweißendes Werkstück anordenbar ist, wobei die Vorrichtung Mittel (19) zum Messen eines Durchdringungsstroms (I₂) zwischen der Elektrode (2) und dem wenigstens einen elektrischen Leiter (10, 50, 60, 61) aufweist, **dadurch gekennzeichnet, dass** die Vorrichtung Mittel (20, 21, 30, 31, 41, 42) zum aktiven Verändern des Durchdringungsstroms (I₂) aufweist.

10. Vorrichtung nach Anspruch 9, **dadurch gekennzeichnet, dass** die Mittel (20, 21, 30, 31, 41, 42) zum Verändern des Durchdringungsstroms (I₂) veränderbare Widerstände (20, 21, 30, 31), Leistungsschalter (41, 42) und/oder Abstandseinstellungsmittel zum Verändern des Abstandes zwischen dem elektrischen Leiter (10, 50, 60, 61) und dem Werkstück (8) sind.

11. Vorrichtung nach Anspruch 9 oder 10, **dadurch gekennzeichnet, dass** die Vorrichtung als wenigstens einen elektrischen Leiter (10, 50, 60, 61) wenigstens eine Leiterschiene (10, 50, 60, 61), insbesondere zwei Leiterschienen (60, 61) aufweist.

12. Vorrichtung nach Anspruch 11, **dadurch gekennzeichnet, dass** die wenigstens eine Leiterschiene (10, 50, 60, 61) Teil wenigstens einer Formiergasschiene ist.

13. Vorrichtung nach Anspruch 12, **dadurch gekennzeichnet, dass** die Vorrichtung eine U-förmige, mit der offenen Seite in Richtung der Austrittsseite (8'') des Plasmastrahls weisende und senkrecht zu diesem ausgerichtete Formiergasschiene aufweist und wenigstens eine wassergekühlte Kupferschiene als wenigstens ein elektrischer Leiter (10, 50, 60, 61) vorgesehen ist.

14. Vorrichtung nach Anspruch 13, **dadurch gekennzeichnet, dass** die U-förmige, mit der offenen Seite in Richtung der Austrittsseite des Plasmastrahls weisende und senkrecht zu diesem ausgerichtete Formiergasschiene (66) zwei wassergekühlte Kupferschienen (60, 61) als elektrische Leiter aufweist, die durch ein nichtleitendes Element (62'') getrennt sind, und ferner die der Austrittsseite des Plasmastrahls (8") zuweisenden Seiten der U-förmigen Formiergasschiene (62, 62') ein nichtleitendes Material aufweisen.

15. Computerprogramm mit Programmcodemitteln zur Durchführung eines Verfahrens gemäß einem der Ansprüche 1 bis 8, wenn das Computerprogramm auf einem Rechner, insbesondere auf einer entsprechenden Recheneinheit in einer Vorrichtung gemäß einem der Ansprüche 9 bis 14, ausgeführt wird.

## Claims

1. Method of plasma keyhole welding wherein, by means of a welding current supplied to an electrode (2) and a plasma gas, a plasma jet (7) directed onto a workpiece (8) to be welded is generated which at least partly passes through the workpiece (8), wherein at least one electrical conductor (10, 50, 60, 61) by means of which a penetration current (I₂) is measured is arranged on the exit side (8") of the plasma jet (7) underneath the workpiece (8), **characterised in that** the penetration current (I₂) is actively varied during the welding process.

2. Method according to claim 1, **characterised in that** the penetration current (I₂) is varied by means of variable electrical resistors (20, 21, 30, 31), by means of power switches (41, 42) and/or by changing the distance between the electrical conductor (10, 50, 60, 61) and the workpiece (8).

3. Method according to claim 1 or 2, **characterised in that** the penetration current (I₂) is varied periodically, stepwise, continuously or *in situ* and/or by impacting with at least one other external current.

4. Method according to one of the preceding claims, **characterised in that** on the basis of the penetration current (I₂) measured, variable process magnitudes are derived, and the variation in the penetration current (I₂) is carried out on the basis of the variable process magnitudes.

5. Method according to claim 4, **characterised in that** the root penetration, the gap width and/or the linear offset of a weld joint are used as variable process magnitudes.

6. Method according to one of the preceding claims, **characterised in that** in addition to the plasma gas, a focussing gas, a protective gas and/or a forming gas are used, a gas or a gas mixture which is selected from the group comprising argon, helium, hydrogen, carbon dioxide, oxygen and mixtures thereof being used as the plasma gas, as the focussing gas, as the protective gas and/or as the forming gas.

7. Method according to one of the preceding claims, **characterised in that** at least one water-cooled copper bar (10, 50, 60, 61) mounted in a forming gas bar is used as at least one electrical conductor (10, 50, 60, 61).

8. Method according to one of the preceding claims, **characterised in that** at least two electrical conductors (60, 61) are provided and the penetration current (I₂) is conducted through the at least two electrical conductors (60, 61).

9. Apparatus for plasma keyhole welding having at least one electrode (2) that can be acted upon by a welding current, and at least one nozzle for a plasma gas (3), by means of which a plasma jet (7) can be produced, and at least one electrical conductor (10, 50, 60, 61) underneath the workpiece (8), while a workpiece that is to be welded can be arranged between the electrode (2) and the conductor (10, 50, 60, 61), the apparatus comprising means (19) for measuring a penetration current (I₂) between the electrode (2) and the at least one electrical conductor (10, 50, 60, 61), **characterised in that** the apparatus comprises means (20, 21, 30, 31, 41, 42) for actively varying the penetration current (I₂).

10. Apparatus according to claim 9, **characterised in that** the means (20, 21, 30, 31, 41, 42) for varying the penetration current (I₂) are variable resistors (20, 21, 30, 31), power switches (41, 42) and/or distance adjusting means for varying the distance between the electrical conductor (10, 50, 60, 61) and the workpiece (8).

11. Apparatus according to claim 9 or 10, **characterised in that** the apparatus comprises, as at least one electrical conductor (10, 50, 60, 61), at least one conductor bar (10, 50, 60, 61), particularly two conductor bars (60, 61).

12. Apparatus according to claim 11, **characterised in that** the at least one conductor bar (10, 50, 60, 61) is part of at least one forming gas bar.

13. Apparatus according to claim 12, **characterised in that** the apparatus comprises a U-shaped forming gas bar arranged with its open side facing in the direction of the exit side (8") of the plasma jet and aligned perpendicularly thereto, and at least one water-cooled copper bar as at least one electrical conductor (10, 50, 60, 61).

14. Apparatus according to claim 13, **characterised in that** the U-shaped forming gas bar (66) arranged with its open side facing in the direction of the exit side of the plasma jet and aligned perpendicularly thereto comprises two water-cooled copper bars (60, 61) as electrical conductors which are separated by a non-conductive element (62"), and furthermore the sides of the U-shaped forming gas bar (62, 62') facing towards the exit side of the plasma jet (8") comprise a non-conductive material.

15. Computer programme with programme coding means for carrying out a method according to one of claims 1 to 8, when the computer programme is run on a computer, particularly on a corresponding central processing unit in an apparatus according to one of claims 9 to 14.

## Revendications

1. Procédé de soudage plasma en trou de serrure, dans lequel un jet de plasma (7) dirigé vers une pièce à souder (8) est généré au moyen d'un courant de soudage délivré à une électrode (2) et d'un gaz plasma, lequel jet de plasma passe au moins partiellement à travers la pièce (8), dans lequel au moins un conducteur électrique (10, 50, 60, 61) par l'intermédiaire duquel un courant de pénétration (I₂) est mesuré, est agencé sur le côté de sortie (8") du jet de plasma (7) sous la pièce (8), **caractérisé en ce que** le courant de pénétration (I₂) est changé activement au cours du processus de soudage.

2. Procédé selon la revendication 1, **caractérisé en ce que** le courant de pénétration (I₂) est changé au moyen de résistances électriques variables (20, 21, 30, 31), au moyen de commutateurs de puissance (41, 42) et/ou en faisant varier la distance entre le conducteur électrique (10, 50, 60, 61) et la pièce (8).

3. Procédé selon la revendication 1 ou 2, **caractérisé en ce que** le courant de pénétration (I₂) est changé de manière périodique, graduelle, continue ou in situ et/ou en appliquant au moins un courant externe supplémentaire.

4. Procédé selon l'une quelconque des revendications précédentes, **caractérisé en ce que** des grandeurs de processus variables sont obtenues sur la base du courant de pénétration (I₂) mesuré, et la variation du courant de pénétration (I₂) est effectuée sur la base des grandeurs de processus variables.

5. Procédé selon la revendication 4, **caractérisé en ce que** la pénétration de la soudure, la largeur d'écartement et/ou le décalage des bords d'un joint soudé sont utilisés comme grandeurs de processus variables.

6. Procédé selon l'une quelconque des revendications précédentes, **caractérisé en ce qu'**en plus du gaz plasma, un gaz de focalisation, un gaz de protection et/ou un gaz de formage sont utilisés, dans lequel un gaz ou un mélange gazeux est utilisé comme gaz plasma, gaz de focalisation, gaz de protection et/ou gaz de formage, lequel gaz ou mélange gazeux étant choisi parmi le groupe constitué d'argon, d'hélium, d'hydrogène, de dioxyde de carbone, d'oxygène et de mélanges de ceux-ci.

7. Procédé selon l'une quelconque des revendications précédentes, **caractérisé en ce qu'**au moins une barre de cuivre (10, 50, 60, 61) refroidie par de l'eau et montée dans une barre de gaz de formage est utilisée en tant qu'au moins un conducteur électrique (10, 50, 60, 61).

8. Procédé selon l'une quelconque des revendications précédentes, **caractérisé en ce qu'**au mois deux conducteurs électriques (60, 61) sont prévus et le courant de pénétration (I₂) est conduit par les au moins deux conducteurs électriques (60, 61).

9. Dispositif de soudage plasma en trou de serrure ayant au moins une électrode (2) à laquelle peut être appliqué un courant de soudage et au moins une buse pour un gaz plasma (3), ce par quoi un jet de plasma (7) peut être généré, et au moins un conducteur électrique (10, 50, 60, 61) sous la pièce (8), dans lequel une pièce à souder peut être agencée entre l'électrode (2) et le conducteur (10, 50, 60, 61), dans lequel le dispositif comporte des moyens (19) pour mesurer un courant de pénétration (I₂) entre l'électrode (2) et le au moins un conducteur électrique (10, 50, 60, 61), **caractérisé en ce que** le dispositif comporte des moyens (20, 21, 30, 31, 41, 42) pour changer activement le courant de pénétration (I₂).

10. Dispositif selon la revendication 9, **caractérisé en ce que** les moyens (20, 21, 30, 31, 41, 42) pour changer le courant de pénétration (I₂) sont des résistances variables (20, 21, 30, 31), des commutateurs de puissance (41, 42) et/ou des moyens de réglage de distance pour faire varier la distance entre le conducteur électrique (10, 50, 60, 61) et la pièce (8).

11. Dispositif selon la revendication 9 ou 10, **caractérisé en ce que** le dispositif comporte au moins une barre conductrice (10, 50, 60, 61), en particulier deux barres conductrices (60, 61), faisant office d'au moins un conducteur électrique (10, 50, 60, 61).

12. Dispositif selon la revendication 11, **caractérisé en ce que** la au moins une barre conductrice (10, 50, 60, 61) est une partie d'au moins une barre de gaz de formage.

13. Dispositif selon la revendication 12, **caractérisé en ce que** le dispositif comporte une barre de gaz de formage en forme de U, dont le côté ouvert est dirigé vers le côté de sortie (8") du jet de plasma et orienté perpendiculairement à celui-ci, et est muni d'au moins une barre de cuivre refroidie par de l'eau faisant office d'au moins un conducteur électrique (10, 50, 60, 61).

14. Dispositif selon la revendication 13, **caractérisé en ce que** la barre de gaz de formage (66) en forme de U, dont le côté ouvert est dirigé vers le côté de sortie du jet de plasma et orienté perpendiculairement à celui-ci comporte deux barres de cuivre refroidies par de l'eau (60, 61) faisant office de conducteurs électriques, lesquelles barres de cuivre sont séparées par un élément non conducteur (62") et les côtés dirigés vers le côté de sortie du jet de plasma (8") de la barre de gaz de formage en forme de U (62, 62') comportent en outre un matériau non conducteur.

15. Programme informatique ayant des moyens de code de programme pour mettre en oeuvre un procédé selon l'une quelconque des revendications 1 à 8, lorsque le programme informatique est exécuté sur un ordinateur, en particulier sur une unité de calcul correspondante dans un dispositif selon l'une quelconque des revendications 9 à 14.
